# EUROPÄISCHE PATENTSCHRIFT

(11) **EP 3 323 580 B1**
(45) Veröffentlichungstag und Bekanntmachung des Hinweises auf die Patenterteilung: **31.03.2021**
(21) Anmeldenummer: 17194868.0
(22) Anmeldetag: 05.10.2017
(51) Int. Cl.: B29B 7/74, B29B 7/28, B29B 7/82, B29B 7/18, B29B 7/24, B29B 7/26

(54) **VERFAHREN ZUR HERSTELLUNG EINER KAUTSCHUKFERTIGMISCHUNG, DEREN VERWENDUNG SOWIE VORRICHTUNG ZU DEREN HERSTELLUNG**
METHOD FOR MANUFACTURING A READY-MADE RUBBER COMPOUND, ITS USE AS WELL AS DEVICE FOR ITS PRODUCTION
PROCÉDÉ DE FABRICATION D'UN MÉLANGE DE CAOUTCHOUC PRÊT À L'EMPLOI, SON UTILISATION ET DISPOSITIF POUR LA FABRICATION D'UN TEL MÉLANGE

(30) Priorität: 17.11.2016 DE 102016222623
(43) Veröffentlichungstag der Anmeldung: 23.05.2018
(73) Patentinhaber: Continental Reifen Deutschland GmbH, 30165 Hannover (DE)
(72) Erfinder: Wortmann, Christopher, 30851 Langenhagen (DE); Steiner, Frank Stefan, 30167 Hannover (DE)
(74) Vertreter: Continental Corporation

(56) Entgegenhaltungen:
- EP-A1- 0 520 812
- EP-A1- 0 616 877
- EP-A2- 0 277 558
- EP-B1- 0 618 055
- DE-C1- 4 342 115
- JP-A- 2008 229 893
- US-A1- 2014 200 307

## Beschreibung

Die Erfindung betrifft ein Verfahren zur Herstellung einer Kautschukfertigmischung in einer Aggregatkombination aus einem Stempelkneter und einem darunter angeordneten stempellosen Kneter. Weiterhin betrifft die Erfindung eine Aggregatkombination aus einem Stempelkneter und einem darunter angeordneten stempellosen Kneter.

Ferner betrifft die Erfindung die Verwendung der nach dem Verfahren hergestellten Kautschukfertigmischung für Fahrzeugluftreifen.

Im Allgemeinen erfolgt die Herstellung einer Kautschukmischung in zwei Mischstufen, nämlich durch Herstellung einer Grundmischung und einer Fertigmischung. Während der Herstellung der Grundmischung werden alle Bestandteile der Mischung, wie Kautschuke, Füllstoffe, Verarbeitungshilfsmittel, Alterungsschutzmittel, Ozonschutzmittel und weitere übliche Zusatzstoffe mit Ausnahme der Vulkanisationschemikalien (Schwefel, Vulkanisationsbeschleuniger, Harze u. a.), miteinander unter Energieeintrag vermischt. Nach der Fertigstellung der Grundmischung, deren Abkühlung und eventueller Lagerung werden dann zur Herstellung der Fertigmischung die restlichen Zusatzstoffe, i. a. alle Vulkanisationsbestandteile, bei niedriger Temperatur eingemischt.

Verfahren zur Herstellung von Kautschukfertigmischungen sind in der DE 4407144 A1 und der EP 0618055 B1 beschrieben.

Die EP 0618055 B1 beschreibt ein Verfahren zum Verarbeiten von nicht reaktive Zusatzstoffe enthaltenden Kautschukgrundmischungen zu Kautschukfertigmischungen unter Verwendung eines Stempelkneters, wobei dem Stempelkneter eine vorher hergestellte, fertige Grundmischung zum Plastizieren zugeführt wird und nach dem Plastizieren die Charge unmittelbar einem stempellosen Kneter zugeführt wird, um die Fertigmischung durch Zugabe von reaktiven Zusatzstoffen bei verringerter Temperatur im Vergleich zum Stempelkneter fertig zu mischen.

In der DE 4407144 A1 wird eine Kautschukfertigmischung dadurch hergestellt, dass in einer ersten Stufe in einem Stempelkneter aus Kautschuk und nicht reaktiven Zusatzstoffen chargenweise eine Grundmischung hergestellt wird und dann die Grundmischung in einer zweiten Stufe unter Hinzufügen von reaktiven Zusatzstoffen ebenfalls chargenweise in einem zweiten Kneter fertig gemischt wird. Als Vorrichtung zur Durchführung des Verfahrens kann eine Aggregatkombination aus einem Stempelkneter und einem darunter angeordneten stempellosen Kneter eingesetzt werden.

Insbesondere bei der Herstellung von Kautschukfertigmischungen enthaltend Kieselsäure und reaktive Zusatzstoffe, wie Silankupplungsagenzien, die bereits in der Grundmischstufe zugegeben werden, kommt es aufgrund von chemischen Reaktionen, wie der Silanisierung unter Ausstoß von z. B. Ethanol, zu Masseverlusten der Kautschukgrundmischung. Das Batch-Gewicht der Kautschukgrundmischung nach der ersten Mischstufe entspricht nicht mehr den eingewogenen Rohmaterialien.
Zudem können weitere Effekte wie das Absaugen von Füllstoffen und/oder Verdampfen von Wasser bei schwankenden Feuchtigkeiten der eingesetzten Rohmaterialien zu schwankenden Batch-Gewichten der Kautschukgrundmischung führen.
Schwankungen im Batch-Gewicht der Grundmischung haben Schwankungen der Qualität der hergestellten Kautschukfertigmischung zur Folge, da die Menge der Vulkanisationschemikalien üblicherweise anhand der eingesetzten Rohmaterialien berechnet wird.

In der JP 4928315 B2 wird ein kontinuierliches Mischverfahren beschrieben, bei dem das Gewicht aus einer ersten Mischstufe auf einer Plattformwaage bestimmt wird und die Mischung dann in der Folge weiterbefördert wird. Anhand des bestimmten Gewichtes werden Mengen von zuzugebenden Chemikalien bestimmt.
Ein Mischverfahren in einer Aggregatkombination aus einem Stempelkneter und einem darunter angeordneten stempellosen Kneter wird in der JP 4928315 B2 nicht offenbart.

Der vorliegenden Erfindung liegt daher die Aufgabe zugrunde, ein Verfahren zur Herstellung einer Kautschukfertigmischung enthaltend Vulkanisationschemikalien in einer Aggregatkombination aus einem Stempelkneter und einem darunter angeordneten stempellosen Kneter bereitzustellen, bei dem die Kautschukfertigmischung mit einer konstanteren und damit verbesserten Qualität hergestellt werden kann.

Gelöst wird diese Aufgabe erfindungsgemäß dadurch, dass das Verfahren nach Anspruch 1 ein diskontinuierliches Verfahren ist und in einer Aggregatkombination aus einem oberen Stempelkneter und einem darunter angeordneten stempellosen Kneter wenigstens die folgenden Verfahrensschritte umfasst:
a) Herstellung einer Kautschukgrundmischung in dem oberen Stempelkneter,
   und
b) Überführung der Kautschukgrundmischung auf eine unterhalb des oberen Stempelkneters in einem Schacht (5) angeordnete Wiegevorrichtung ohne Zwischenlagerung und
c) Bestimmung des Batch-Gewichtes der Kautschukgrundmischung und
d) Überführung der gewogenen Kautschukgrundmischung in den stempellosen Kneter und
e) Berechnung der Menge an Vulkanisationschemikalien auf Basis des Batch-Gewichtes der gewogenen Kautschukgrundmischung und
f) Zugabe der berechneten Menge der Vulkanisationschemikalien zu der Kautschukgrundmischung in den stempellosen Kneter und
g) Mischen aller in dem stempellosen Kneter vorhandenen Bestandteile zu einer Kautschukfertigmischung,
dadurch gekennzeichnet, dass die Wiegevorrichtung (2) im Schacht (5) mit einer Heizvorrichtung und bevorzugt wärmeisolierten Schachtwänden (6) angeordnet ist und die Kautschukgrundmischung auf der Wiegevorrichtung (2) beheizt wird, und die Kautschukgrundmischung wenigstens eine Kieselsäure als Füllstoff und wenigstens ein Silan enthält.

Es hat sich gezeigt, dass durch die zusätzlichen Verfahrensschritte b) bis e), also der Bestimmung des Gewichtes der Kautschukgrundmischung nach der Grundmischstufe (Batch-Gewicht) und der Berechnung und ggf. Anpassung der Menge an zuzugebenden Vulkanisationschemikalien die Kautschukfertigmischung mit einer verbesserten Qualität hergestellt wird.
Masseverluste aufgrund der oben beschriebenen Phänomene und dadurch auftretende Gewichtsschwankungen werden somit ausgeglichen und die tatsächlich notwendige Menge an Vulkanisationschemikalien berechnet und verwendet. Mit dem erfindungsgemäßen Verfahren wird somit auch eine Über- oder Unterdosierung der Vulkanisationschemikalien vermieden. Das Vermeiden der Überdosierung resultiert wiederum in einer Kostenersparnis.
Das erfindungsgemäße Verfahren in der Aggregatkombination aus einem oberen Stempelkneter und einem darunter angeordneten stempellosen Kneter ist ein diskontinuierliches Verfahren.
Unter Batch-Gewicht wird das gesamte Gewicht einer gemischten Mischungscharge der Grundmischung nach erfolgter Grundmischstufe im oberen Stempelkneter im diskontinuierlichen Verfahren verstanden.

Das erfindungsgemäße Verfahren ist für die Herstellung von Kautschukfertigmischungen für Fahrzeugreifen enthaltend Kieselsäure oder Ruß und Kieselsäure als Füllstoff geeignet. Das erfindungsgemäße Verfahren ist auch zur Herstellung von
Kautschukfertigmischungen, die andere polare Füllstoffe in Kombination mit Kieselsäure enthalten, geeignet. Zu anderen polaren Füllstoffen zählen alle dem Fachmann bekannten, wie beispielsweise Alumosilicate, Kreide, Stärke, Magnesiumoxid, Titandioxid oder Kautschukgele.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Eine Aggregatkombination aus einem Stempelkneter und einem darunter angeordneten stempellosen Kneter ist beispielsweise und insbesondere aus der DE 4314706 A1, DE 4407144 A1, bekannt.
Der unterhalb des Stempelkneters angeordnete Kneter ist ein stempelloser Kneter, der auf Grund seiner offenen Ausbildung eine einfache Überführung der Kautschukgrundmischung von dem Stempelkneter bzw. dem Ausformaggregat in den stempellosen Kneter ermöglicht. Zwischen dem oberen und dem unteren Kneter befindet sich ein Zwischenraum, der durch einen Schacht gebildet wird, durch den das Mischgut hindurch bewegt wird bzw. fällt.
Der stempellose Kneter weist vorzugsweise ein Arbeitsvolumen auf, das 70 bis 200 % größer ist als das des Stempelkneters. Auf diese Weise gelingt zusätzlich ein Abkühlen der Mischung und es können weitere Mischungsbestandteile hinzugefügt werden.

Erfindungsgemäß wird in Schritt a) zunächst eine Kautschukgrundmischung in der Mischkammer des oberen Stempelkneters hergestellt.

Die Kautschukgrundmischung enthält dabei wenigstens einen Kautschuk, bevorzugt wenigstens einen festen Kautschuk. Unter "fester Kautschuk" ist dabei ein Kautschuk mit einem Gewichtsmittel Mw des Molekulargewichts gemäß GPC von 250.000 bis 5.000.000 g/mol zu verstehen.

Der feste Kautschuk ist dabei bevorzugt ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.
Insbesondere Nitrilkautschuk, hydrierter Acrylnitrilbutadienkautschuk, Chloroprenkautschuk, Butylkautschuk, Halobutylkautschuk oder Ethyl-en-Propylen-DienKautschuk kommen bei der Herstellung von technischen Gummiartikeln, wie Gurte, Riemen und Schläuche, und/oder Schuhsohlen zum Einsatz.

Bevorzugt umfasst der wenigstens eine feste Kautschuk wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bevorzugt ist der Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR).

Erfindungsgemäß enthält die in Schritt a) hergestellte Kautschukgrundmischung bereits wenigstens eine Kieselsäure und optional wenigstens einen Ruß.

Bei den oder der Kieselsäure(n) und dem oder den Ruß(en) kann es sich um die dem Fachmann bekannten Kieselsäuren, die als Füllstoff für Reifenkautschukmischungen geeignet sind, handeln.
Die Begriffe "Kieselsäure" und "Silika" werden im Rahmen der vorliegenden Erfindung, wie auch in der Fachwelt üblich, synonym verwendet.
Die Kautschukgrundmischung kann auch andere polare Füllstoffe alleine oder in Kombination mit Kieselsäure enthalten, geeignet. Zu anderen polaren Füllstoffen zählen alle dem Fachmann bekannten, wie beispielsweise Alumosilicate, Kreide, Stärke, Magnesiumoxid, Titandioxid oder Kautschukgele.

Erfindungsgemäß wird in Schritt a) bereits ein reaktiver Zusatzstoff der Kautschukgrundmischung zugegeben.

Erfindungsgemäß handelt es sich bei dem reaktiven Zusatzstoff um ein Organosilan und optional zudem ein funktionalisiertes Polymer. Es kann somit auch ein Gemisch aus einem oder mehreren Organosilan(en) mit einem oder mehreren funktionalisierten Polymer(en) verwendet werden. Ferner ist auch ein Gemisch verschiedener Organosilane denkbar.

Unter dem Begriff "Organosilan" werden im Rahmen der vorliegenden Erfindung organische chemische Verbindungen verstanden, die wenigstens eine Silyl-Gruppe aufweisen. Derartige Substanzen sind in der Fachwelt der Kautschukmischungen für Fahrzeugreifen auch als Silan-Kupplungsagenzien bekannt. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Unter dem Begriff "funktionalisiertes Polymer" wird im Rahmen der vorliegenden Erfindung ein Polymer verstanden, das entlang der Polymerketten und/oder am Ende der Ketten eine Funktionalisierung aufweisen, die eine Anbindung an Kieselsäure oder vergleichbare Füllstoffe ermöglichen. Bevorzugt und beispielsweise handelt es sich hierbei um eine funktionelle Gruppe ausgewählt aus der Gruppe bestehend aus Hydroxy-Gruppe und/oder Ethoxy-Gruppe und/oder Epoxy-Gruppe und/oder Siloxan-Gruppe und/oder Aminosiloxan und/oder Carboxy-Gruppe und/oder Silan-Sulfid-Gruppe und/oder Alkoxysilan-Gruppe und einem primären Amin und/oder einer Alkoxysilan-Gruppe und einem Thiol.

Das funktionalisierte Polymer kann dabei ein fester Kautschuk mit dem oben genannten Mw sein. In dem Fall stellt somit dieser enthaltene feste Kautschuk bereits wenigstens einen reaktiven Zusatzstoff dar.

Das funktionalisierte Polymer kann aber auch ein flüssiges Polymer sein, welches nicht in die 100 Teile der phr-Berechnung eingeht. Unter flüssigen Polymeren werden Polymere mit einem Mw von 500 bis 55000 g/mol verstanden.
Geeignete flüssige, organosilicium-funktionalisierte Polymere werden beispielsweise in der US 20020082333 A1 offenbart.

Erfindungsgemäß handelt es sich bei dem reaktiven Zusatzstoff um wenigstens ein Organosilan.
Insbesondere bei der Silanisierung von Kieselsäure mit Organosilanen in der Kautschukgrundmischung kommt es zu Masseverlusten durch austretende Reaktionsprodukte, wie z. B. Ethanol bei der Verwendung eines Silans mit EthoxyGruppen.

Ferner können der Kautschukmischung, insbesondere der Kautschukgrundmischung, weitere dem Fachmann bekannte Bestandteile, wie Weichmacher, Alterungsschutzmittel, Prozesshilfsmittel, Aktivatoren etc. zugegeben werden.

Erfindungsgemäß wird die in Schritt a) hergestellte Kautschukgrundmischung in Verfahrensschritt b) auf eine unterhalb des oberen Stempelkneters angeordnete Wiegevorrichtung ohne Zwischenlagerung überführt.
Die Überführung erfolgt insbesondere durch Öffnen der Entleerungsklappe unterhalb der Mischkammer des Stempelkneters.

Unter Wiegevorrichtung wird im Rahmen der vorliegenden Erfindung prinzipiell jede Wiegevorrichtung verstanden, die geeignet ist, das Gewicht der im oberen Stempelkneter in Schritt a) gemischten Kautschukgrundmischung zu bestimmen. Die Wiegevorrichtung ist zwischen dem oberen Stempelkneter und dem unteren stempellosen Kneter angeordnet.

Gemäß einer bevorzugten Ausführungsform der Erfindung ist die Wiegevorrichtung eine Waage, die mittels einer Schiebe- und Ziehvorrichtung im Schacht, also im Zwischenraum zwischen Stempelkneter und stempellosem Kneter, angeordnet ist. Hierbei dient die Schiebevorrichtung dazu, die Waage in den Zwischenraum zu bewegen, wenn sie dort benötigt wird. Der Schiebemechanismus kann mechanisch, z. B. durch einen Schneckenantrieb oder einen anderen Motor betrieben werden. Denkbar ist auch ein hydraulischer oder pneumatischer Antrieb durch einen oder zwei entsprechende Zylinder. Bevorzugt sorgt beim Rausziehen der Waage ein Abstreifer dafür, dass eventuelle Reste der gewogenen Kautschukgrundmischung von der Waage gestrichen werden, wodurch die Berechnung der Menge an Vulkanisationschemikalien noch genauer erfolgt. Der Abstreifer ist bevorzugt aus Metall gefertigt, besonders bevorzugt aus Edelstahl oder Messing oder vergleichbaren geeigneten Metallen. Der Abstreifer kann beispielsweise und bevorzugt ein Winkel oder ein dreieckig geformtes Materialstück sein.

Die Waage selbst ist insbesondere und beispielweise eine herkömmliche geeignete Konstruktion aus einem Blech mit Wiegezellen. Dies gilt auch für die anderen beschriebenen Ausführungsformen der Erfindung, sofern nichts anderes angegeben ist.

Besonders bevorzugt ist die Waage mit einer Schutzhülle umgeben, auf die das Mischgut aus dem oberen Stempelkneter fällt. Die Schutzhülle hat den zusätzlichen Vorteil, dass sie den Schacht von außen abdichtet und somit kein oder so gut wie kein Staub in den Schacht gelangt. Ferner können auch keine Stäube und/oder Dämpfe aus dem Schacht heraus gelangen.
Die Schutzhülle ist gemäß einer besonders bevorzugten Ausführung oberhalb der Waage an der Schachtwand des Schachtes, also des Zwischenraums, an wenigstens einem Befestigungspunkt befestigt und verläuft auf der Wiegeoberfläche der Waage und auf der gegenüberliegenden Schachtwand um die Waage herum und unterhalb der Waage bevorzugt im Wesentlichen parallel zur Wiegeoberfläche und aus der Schachtwand in Projektion unterhalb des Befestigungspunktes heraus. Der wenigstens eine Befestigungspunkt befindet sich somit entlang der Verbindungsachse zwischen oberem und unterem Kneter oberhalb des Austrittspunktes und auf der gleichen Seite des Zwischenraumes. An dem Austrittspunkt ist die Schutzhülle nicht befestigt und kann in den Zwischenraum bewegt werden oder durch Ziehen aus dem Zwischenraum wegbewegt werden. Unter "Austrittspunkt" ist im Rahmen der vorliegenden Erfindung auch ein Bereich zu verstehen.
Unter "Befestigungspunkt" ist im Rahmen der vorliegenden Erfindung auch ein Bereich zu verstehen.
Der Begriff "Punkt" ist somit nicht eng auszulegen.

Die Befestigung kann beispielsweise durch schrauben, nieten oder dübeln erfolgen Insbesondere ist dabei auch eine Leiste denkbar, über die die Hülle an der Schachtwand befestigt ist, wodurch die Befestigung stabiler ist.

Im Anschluss an das Wiegen gemäß Schritt c) wird dann die Schutzhülle mit der Waage aus dem Zwischenraum weggezogen, sodass die gewogene Kautschukmischung gemäß Schritt d) in den unteren stempellosen Kneter überführt wird. Hierbei fällt die gewogene Kautschukgrundmischung durch das Rausziehen der Waage und der Schutzhülle nach unten.
Bevorzugt sorgt beim Rausziehen der Waage ein Abstreifer dafür, dass eventuelle Reste der gewogenen Kautschukgrundmischung von der Schutzhülle gestrichen werden, wodurch die Berechnung der Menge an Vulkanisationschemikalien noch genauer erfolgt. Der Abstreifer ist bevorzugt aus Metall gefertigt, besonders bevorzugt aus Edelstahl oder Messing oder vergleichbaren geeigneten Metallen. Der Abstreifer kann beispielsweise und bevorzugt ein Winkel oder ein dreieckig geformtes Materialstück sein.
Bevorzugt weist die Waage an der der Befestigung gegenüberliegenden Schachtwand wenigstens eine Rolle auf, über die die Schutzhülle beim Rein- und Rausziehen bewegt werden kann. Hierdurch ergibt sich eine längere Haltbarkeit der Schutzhülle, sodass diese Konstruktion wartungsärmer ist.
Die Schutzhülle ist bevorzugt aus wenigstens einer Kautschukmischung aufgebaut, sodass sie eine nötige Flexibilität und Festigkeit aufweist. Gleichzeitig sollte die Oberfläche möglichst gar nicht klebrig sein. Geeignete Mischungen für die Schutzhülle umfassen beispielsweise Transportband-Mischungen, welche dem Fachmann bekannt sind und auf Langlebigkeit unter ständiger Beanspruchung ausgelegt sind.

Mit dieser Vorrichtung kann das Wiegen der Kautschukgrundmischung automatisiert und platzsparend erfolgen.

Gemäß einer weiteren bevorzugten Ausführungsform der Erfindung ist die Wiegevorrichtung eine Waage, die mittels einer Drehvorrichtung im Zwischenraum zwischen Stempelkneter und stempellosem Kneter angeordnet ist. Hierbei dient die Drehvorrichtung dazu, die Waage in dem Zwischenraum zu bewegen und zwar hierbei um eine Rotationsachse senkrecht zur Verbindungslinie zwischen oberem und unterem Kneter zu drehen und somit aus der Wiegeebene zu klappen/kippen. Bei der Drehvorrichtung kann es sich um jede dem Fachmann bekannte und geeignete Drehvorrichtung handeln, wie beispielsweise ein Gelenk.
Im Anschluss an das Wiegen gemäß Schritt c) wird dann die Waage wieder so gedreht bzw. geklappt, dass die gewogene Kautschukmischung nach unten fällt und somit gemäß Schritt d) in den unteren stempellosen Kneter überführt wird.
Mit dieser Vorrichtung kann das Wiegen der Kautschukgrundmischung automatisiert und platzsparend erfolgen. Durch das Drehen bzw. Runterklappen der Waage fällt dabei die gewogene Mischung vollständig oder nahezu vollständig nach unten in den stempellosen Kneter. Etwaige Reste der Grundmischung auf der Waage werden angezeigt und können daher bei der Berechnung der Vulkanisationschemikalien berücksichtigt werden.

Gemäß einer weiteren bevorzugten Ausführungsform der Erfindung ist die Wiegevorrichtung eine Waage, die mittels einer Drehvorrichtung im Zwischenraum zwischen Stempelkneter und stempellosem Kneter angeordnet ist. Hierbei dient die Drehvorrichtung dazu, die Waage in dem Zwischenraum zu bewegen und zwar hierbei um eine Rotationsachse parallel zur Verbindungslinie zwischen oberem und unterem Kneter zu drehen. Die Waage wird hierbei somit aus dem Zwischenraum rausgedreht. Bevorzugt sorgt auch hier ein Abstreifer dafür, dass das gewogene Mischgut von der Waage in den unteren Kneter fällt.

Gemäß einer weiteren bevorzugten Ausführungsform der Erfindung ist die Wiegevorrichtung eine Walze, in die eine Waage integriert ist oder die auf Wiegezellen angeordnet ist. Die Walze hat den zusätzlichen Vorteil, dass die Kautschukgrundmischung vor dem Überführen in den unteren Kneter ausgeformt wird und dass das Wiegen und Überführen auf besonders einfache Weise erfolgt, da die Mischung nach dem Walzen automatisch nach unten in den stempellosen Kneter fällt. Hierdurch können insbesondere krümelige Kautschukgrundmischungen, insbesondere enthaltend hohe Mengen an Kieselsäure, einfacher in den unteren Kneter überführt werden.

Gemäß einer weiteren bevorzugten Ausführungsform der Erfindung ist die Wiegevorrichtung ein Extruder, in den eine Waage integriert ist oder der auf Wiegezellen angeordnet ist. Ein Extruder, bevorzugt ein Doppelschneckenextruder, hat den zusätzlichen Vorteil, dass die Kautschukgrundmischung vor dem Überführen in den unteren Kneter ausgeformt wird.
Hierdurch können insbesondere krümelige Kautschukgrundmischungen, insbesondere enthaltend hohe Mengen an Kieselsäure, einfacher in den unteren Kneter überführt werden. Je nach Art der Wiegevorrichtung muss die Anlage insbesondere der Zwischenraum zwischen oberem und unterem Kneter entsprechend ausgelegt werden.

Gemäß Verfahrensschritt c) des erfindungsgemäßen Verfahrens erfolgt die Bestimmung des Batch-Gewichtes der Kautschukgrundmischung mittels der Wiegevorrichtung wie insbesondere und beispielhaft in den vorstehenden Ausführungen beschrieben.

Gemäß einer vorteilhaften Weiterbildung ist die Wiegevorrichtung im Schacht, also im Zwischenraum zwischen oberem und unterem Kneter, mit einer Kühlvorrichtung und dabei bevorzugt wärmeisolierten Schachtwänden angeordnet, wobei die Kautschukgrundmischung auf der Wiegevorrichtung gleichzeitig gekühlt wird. Bevorzugt enthält die Kautschukgrundmischung hierbei wenigstens einen verstärkenden Füllstoff, bevorzugt wenigstens einen Ruß, als Füllstoff. Insbesondere Rußmischungen werden in der Grundmischstufe aufgrund der auftretenden Scherkräfte bei der Dispersion des Rußes im Kautschuk stark erwärmt. Die Mischung sollte dann vor dem Vermischen mit den Vulkanisationschemikalien abgekühlt werden, um eine unerwünschte Vorvernetzung (Scorch) zu vermeiden.
Durch die gleichzeitige Kühlung der Mischung, insbesondere auf 120 bis 130 °C, beim Wiegen, kann die Mischdauer in dem unteren stempellosen Kneter verringert werden und die Zugabe der Vulkanisationschemikalien zu einem früheren Zeitpunkt erfolgen. Hierdurch wird eine Durchsatzsteigerung in der Aggregatkombination erzielt.
Die somit hergestellte Kautschukfertigmischung ist insbesondere für Laufstreifen von Fahrzeugreifen, insbesondere Fahrzeugluftreifen, geeignet.

Bevorzugt erfolgt das Kühlen über einen Zeitraum von z. B. 1 bis 10 Minuten. Besonders bevorzugt entspricht die Dauer des Kühlens zumindest in etwa der Mischzeit im oberen Stempelkneter. Hierdurch kann, während eine Charge Grundmischung gewogen und gekühlt wird, gleichzeitig eine neue Kautschukgrundmischung für eine separate Charge gemischt werden. Damit ergibt sich eine optimale Auslastung der Aggregatkombination. Eine geeignete Kühlvorrichtung umfasst beispielsweise ein Kühlgebläse, wobei kühle Luft über die Kautschukgrundmischung geführt wird.

Erfindungsgemäß ist die Wiegevorrichtung im Schacht, also im Zwischenraum zwischen oberem und unterem Kneter, mit einer Heizvorrichtung und dabei bevorzugt wärmeisolierten Schachtwänden angeordnet, wobei die Kautschukgrundmischung auf der Wiegevorrichtung beheizt wird.
Hierzu enthält die Kautschukgrundmischung hierbei wenigstens eine Kieselsäure als Füllstoff und wenigstens ein Silan. Unter Silan sind die oben beschriebenen Organosilane zu verstehen.
Die Silanisierung erfordert zum Teil vergleichsweise hohe Temperaturen, insbesondere von 140 bis 190 °C. Durch das gleichzeitige Heizen beim Wiegen, kann die Mischdauer unter hohen Temperaturen in dem oberen Stempelkneter verringert werden, da die Silanisierung zumindest zum Teil in die Zwischenkammer verlagert wird. Bei gleichzeitigem Wiegen können die Dauer der Silanisierung und damit die Verweilzeit in der Zwischenkammer anhand des Masseverlustes genau bestimmt werden. Der obere Mischer kann zudem zu einem früheren Zeitpunkt wieder mit neuem Mischgut befüllt werden. Insgesamt ergibt sich somit gemäß der beschriebenen Weiterbildung aus Wiegen und gleichzeitigem Heizen, insbesondere auf Temperaturen, die die rezeptspezifischen chemischen Reaktionen unterstützen, eine erhebliche Durchsatzsteigerung in der Aggregatkombination.
Die somit hergestellte Kautschukfertigmischung ist insbesondere für Laufstreifen von Fahrzeugreifen, insbesondere Fahrzeugluftreifen, geeignet.
Bevorzugt erfolgt das Heizen über einen Zeitraum von z. B. 1 bis 10 Minuten. Besonders bevorzugt entspricht die Dauer des Heizens zumindest in etwa der Mischzeit im oberen Stempelkneter. Hierdurch kann, während eine Charge Grundmischung gewogen und geheizt wird, gleichzeitig eine neue Kautschukgrundmischung für eine separate Charge gemischt werden. Damit ergibt sich eine optimale Auslastung der Aggregatkombination. Das Heizen kann beispielsweise über eine elektrische Heizvorrichtung oder über ein Medium wie Wasser oder Dampf oder Öl erfolgen.

Erfindungsgemäß erfolgt in Schritt d) die Überführung der gewogenen Kautschukgrundmischung in den stempellosen Kneter und zwar bevorzugt gemäß den oben beschriebenen Ausführungsformen.

Erfindungsgemäß erfolgt in Schritt e) die Berechnung der Menge an Vulkanisationschemikalien auf Basis des Batch-Gewichtes der gewogenen Kautschukgrundmischung. Die Berechnung erfolgt bevorzugt automatisiert. Die nötige Menge an Vulkanisationschemikalien bemisst sich an der Zielrezeptur bezogen auf 100 Gewichtsteile Kautschuk, die aus der gewogenen Grundmischung bestimmt werden.

Erfindungsgemäß erfolgt in Schritt f) die Zugabe der berechneten Menge der Vulkanisationschemikalien zu der Kautschukgrundmischung in den stempellosen Kneter.

Bevorzugt erfolgt die Zugabe der Vulkanisationschemikalien dadurch, dass anhand des Batch-Gewichtes der Kautschukgrundmischung automatisiert die nötige Menge an Vulkanisationschemikalien berechnet, abgewogen und zudosiert wird.

Bei dem erfindungsgemäßen Verfahren ist jedoch auch eine umgekehrte Reihenfolge denkbar, bei der die Vulkanisationschemikalien im unteren stempellosen Kneter vorgelegt werden und anschließend die ausgeformte Kautschukgrundmischung hinzugegeben wird. Dabei ist ferner denkbar, dass die Menge der Kautschukgrundmischung reduziert wird und an die Menge der bereits vorab gewogenen Vulkanisationschemikalien angepasst wird.

Die Vulkanisationschemikalien umfassen im Rahmen der vorliegenden Erfindung chemische Substanzen, die eine Vulkanisation der Kautschukfertigmischung unter dem Fachmann bekannten Bedingungen ermöglichen.

Bevorzugt handelt es sich bei den Vulkanisationschemikalien um ein Vulkanisationssystem, welches auf der Schwefelvulkanisation basiert. Dieses enthält wenigstens einen Vulkanisationsbeschleuniger und elementaren (freien) Schwefel und/oder wenigstens eine schwefelspendende Substanz.

Die genannten Substanzen sind dem Fachmann bekannt, insbesondere für die Vulkanisation von Dienkautschuk(en).

In Verfahrensschritt g) erfolgt schließlich das Mischen aller in dem stempellosen Kneter vorhandenen Bestandteile zu einer Kautschukfertigmischung.

Bevorzugt erfolgt das Mischen in Schritt f) bei einer Temperatur von 90 bis 140 °C. Sofern nicht erfindungsgemäß anders angegeben werden bei sämtlichen Schritten dem Fachmann bekannte Verfahrensweisen, Bedingungen, z. B. Mischdauer und Mischtemperatur, und Vorrichtungen, z. B. Dosiervorrichtungen für die Bestandteile der Kautschukgrundmischung und der Vulkanisationschemikalien, verwendet.

Ein weiterer Gegenstand der vorliegenden Erfindung ist die mit dem beschriebenen erfindungsgemäßen Verfahren inklusiver aller Ausführungen hergestellte Kautschukfertigmischung.

Ein weiterer Gegenstand der vorliegenden Erfindung ist die Verwendung nach Anspruch 10 der mit dem beschriebenen erfindungsgemäßen Verfahren inklusiver aller Ausführungen hergestellten Kautschukfertigmischung in Fahrzeugreifen, insbesondere Fahrzeugluftreifen.

Die erfindungsgemäße hergestellte Kautschukfertigmischung sowie ein Fahrzeugreifen, in dem die erfindungsgemäß hergestellte Kautschukfertigmischung verwendet wird, weisen eine konstante und damit verbesserte Qualität auf.

Ein weiterer Gegenstand der vorliegenden Erfindung ist eine Aggregatkombination nach Anspruch 11 zur Durchführung des erfindungsgemässen Verfahrens zur Herstellung einer Kautschukfertigmischung, bestehend aus einem oberen Stempelkneter und einem darunter angeordneten stempellosen Kneter, die dadurch gekennzeichnet ist, dass sie zwischen dem oberen Stempelkneter und dem stempellosen Kneter zumindest eine Wiegevorrichtung, die dort im Schacht mit einer Heizvorrichtung und bevorzugt wärmeisolierten Schachtwänden angeordnet ist, aufweist. Für die Wiegevorrichtung gelten sämtliche oben getroffenen Ausführungen.

In einer besonders bevorzugten Ausführungsform der erfindungsgemäßen Aggregatkombination weist die Wiegevorrichtung die oben beschriebene Kombination aus beweglicher Schutzhülle und Waage auf. Hierdurch ist die Aggregatkombination bzw. der Schacht von außen abgedichtet, wodurch so gut wie kein Staub in den Schacht gelangen kann. Ferner erfolgt das Wiegen und anschließende Überführen der gewogenen Grundmischung bei dieser Konstruktion auf einfache, elegante und saubere Weise, ohne dass die Waage selbst von der Mischung verunreinigt werden kann.

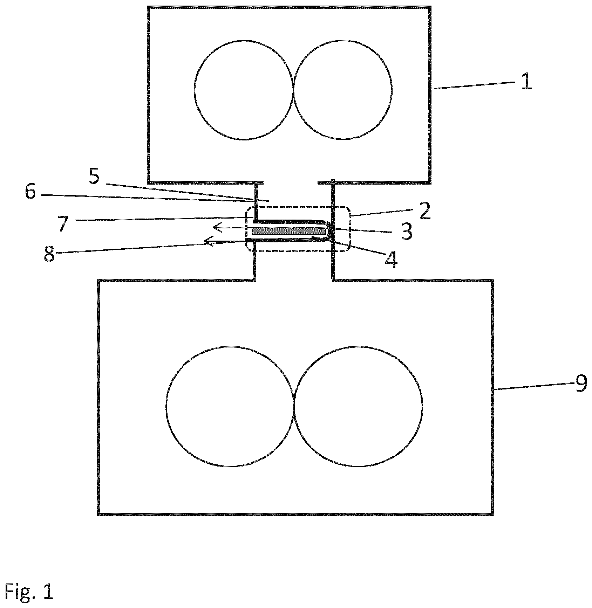

Anhand von Ausführungsbeispielen soll die Erfindung näher erläutert werden. Dabei zeigt die Fig. 1 eine Prinzipskizze eines senkrechten Schnittes durch eine bevorzugte erfindungsgemäße Variante einer Vorrichtung zur Herstellung von Kautschukmischungen, die einen Stempelkneter und einen stempellosen Kneter sowie eine Wiegevorrichtung im Schacht zwischen oberem Stempelkneter und unterem stempellosen Kneter aufweist.

Im Nachfolgenden werden nur die wesentlichen Bestandteile dieser Vorrichtung beschrieben, bezüglich weiterer Details der Aggregatkombination aus Stempelkneter und stempellosem Kneter wird auf die EP 0 472 931 A1 verwiesen, die die Kneteranordnung ohne Wiegevorrichtung in dem Zwischenraum betrifft und ausführlicher beschreibt.

In Fig. 1 sind der obere Stempelkneter 1, der darunter befindliche Schacht 5, die darin befindliche Wiegevorrichtung 2 und der untere Stempelkneter 9 schematisch dargestellt. Im oberen Stempelkneter 1 erfolgt erfindungsgemäß in Schritt a) die Herstellung einer Kautschukgrundmischung und gemäß Schritt b) die anschließende Überführung der Kautschukgrundmischung auf eine unterhalb des oberen Stempelkneters 1 angeordnete Wiegevorrichtung 2 ohne Zwischenlagerung. Die Wiegevorrichtung 2 umfasst eine Waage, die mittels Schiebe- und Ziehvorrichtung in und aus dem Schacht bewegt werden kann.

Der Bereich des Schachtes 5, in dem die Wiegevorrichtung 2 angeordnet ist, ist der Übersichtlichkeit halber mit einer gestrichelten Linie hervorgehoben. Die Wiegevorrichtung weist eine Waage 3 (Blech mit Wiegezellen) auf, die von einer Schutzhülle 4 umgeben ist. Die Waage selbst ist beispielweise eine herkömmliche geeignete Konstruktion aus einem Blech mit Wiegezellen.
Die Schutzhülle 4 ist dabei an der Schachtwand 6 an einem Befestigungspunkt 7 befestigt. Wie in Fig. 1 erkennbar verläuft die Hülle 4 vom Befestigungspunkt 7 aus auf der Wiegeoberfläche der Waage und auf der gegenüberliegenden Schachtwand um die Waage herum und unterhalb der Waage bevorzugt im Wesentlichen parallel zur Wiegeoberfläche und aus der Schachtwand an einem Austrittspunkt 8 heraus.
Gemäß Schritt c) wird die Kautschukgrundmischung gewogen, und zwar befindet sich die Mischung in diesem Beispiel auf der zum oberen Stempelkneter 1 gerichteten Oberfläche der Schutzhülle 4.
Gemäß Schritt d) erfolgt das Überführen der gewogenen Grundmischung in den stempellosen Kneter 9. In diesem Beispiel wird dies dadurch erreicht, dass die Schutzhülle 4 und die Waage 3 durch seitliches Ziehen über den Austrittspunkt 8 entsprechend der Pfeilrichtung aus dem Schacht 5 bewegt werden. Hierbei wird die Waage 3 vollständig aus dem Schacht 5 bewegt, sodass die Mischung von der Schutzhülle 4 in den unteren stempellosen Kneter fällt. Die Schutzhülle 4 ist somit Teil der Schiebe- und Ziehvorrichtung.
Die Vorrichtung kann noch einen Abstreifer 10 aufweisen, die eventuelle Reste der gewogenen Grundmischung von der Schutzhülle 4 streift. Der Abstreifer 10 ist in Fig. 1 nicht dargestellt. Der Abstreifer 10 ist beispielsweise ein Edelstahl-Winkel.

Gemäß Schritt e) erfolgt die Berechnung der Menge an Vulkanisationschemikalien auf Basis des Batch-Gewichtes der gewogenen Kautschukgrundmischung und anschließend gemäß Schritt f) die Zugabe der berechneten Menge der Vulkanisationschemikalien zu der Kautschukgrundmischung in den stempellosen Kneter. Die nötige Menge an Vulkanisationschemikalien bemisst sich an der Zielrezeptur bezogen auf 100 Gewichtsteile Kautschuk, die aus der gewogenen Grundmischung bestimmt werden.

In Schritt g) erfolgt schließlich das Mischen aller in dem stempellosen Kneter 9 vorhandenen Bestandteile zu einer Kautschukfertigmischung.
Die Kautschukfertigmischung wird mit dem erfindungsgemäßen Verfahren in der erfindungsgemäßen Aggregatkombination mit konstanter und damit verbesserter Qualität hergestellt.

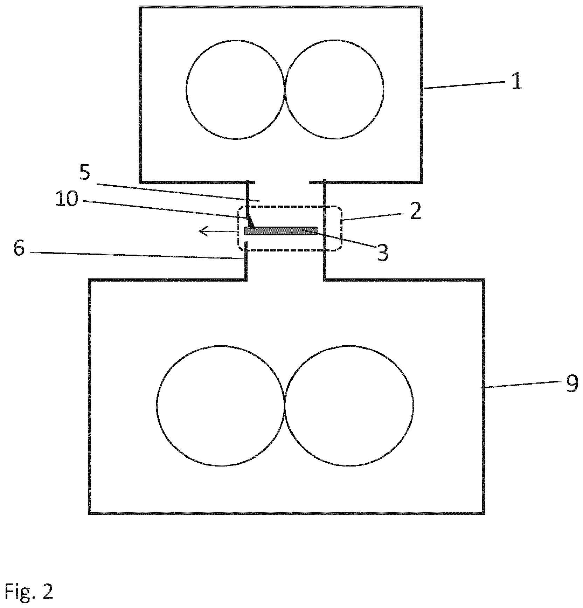

In Fig. 2 ist ein weiteres erfindungsgemäßes Beispiel der Aggregatkombination mit einer Wiegevorrichtung 2 schematisch in einer Prinzipskizze dargestellt. In Fig. 2 sind ebenfalls der obere Stempelkneter 1, der darunter befindliche Schacht 5, eine darin befindliche Wiegevorrichtung 2 und der untere Stempelkneter 9 schematisch dargestellt. Hierbei weist Wiegevorrichtung 2 eine Waage 3 ohne Schutzhülle auf. Die Waage 3 wird nach dem Wiegen mit einer geeigneten Vorrichtung entsprechend der angezeigten Pfeilrichtung aus dem Schacht 5 gezogen.
Ferner ist in Fig. 2 gezeigt, dass an der Schachtwand 6 ein Abstreifen 10 in Form eines dreieckigen Materialstücks, beispielsweise aus Edelstahl, vorgesehen ist. Dieses sorgt dafür, dass die Mischung gemäß Schritt d) in den unteren Kneter fällt.
Ansonsten gelten die gleichen Verfahrensschritte wie beispielsweise zu Fig. 1 beschrieben.

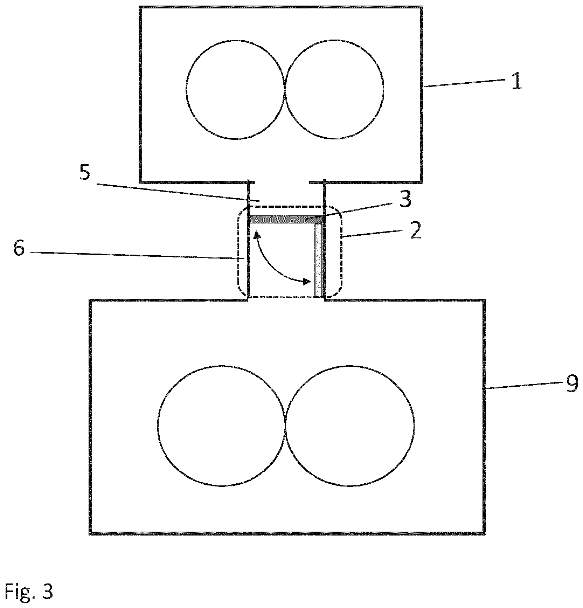

In Fig. 3 ist ein weiteres erfindungsgemäßes Beispiel der Aggregatkombination mit einer Wiegevorrichtung 2 schematisch in einer Prinzipskizze dargestellt. In Fig. 3 sind der obere Stempelkneter 1, der darunter befindliche Schacht 5, die darin befindliche Wiegevorrichtung 2 und der untere Stempelkneter 9 schematisch dargestellt. Hierbei umfasst die Wiegevorrichtung 2 eine Waage 3, die mittels einer Drehvorrichtung nach unten geklappt werden kann, um die gewogene Mischung gemäß Schritt d) in den unteren Kneter fallen zu lassen. Hierbei dient die Drehvorrichtung dazu, die Waage 3 in dem Schacht 5 zu bewegen und zwar hierbei um eine Rotationsachse senkrecht zur Verbindungslinie zwischen oberem und unterem Kneter zu drehen und somit aus der Wiegeebene zu klappen/kippen, wie in Fig. 3 anhand der Pfeile erkennbar.
Ansonsten gelten die gleichen Verfahrensschritte wie beispielsweise zu Fig. 1 beschrieben.

### Bezugszeichenliste:

- 1: Oberer Stempelkneter
- 2: Wiegevorrichtung
- 3: Waage
- 4: Schutzhülle
- 5: Schacht, Kanalförmiger Zwischenraum
- 6: Schachtwand
- 7: Befestigungspunkt der Schutzhülle an der Schachtwand
- 8: Austrittspunkt der Schutzhülle aus der Schachtwand
- 9: Stempelloser Kneter
- 10: Abstreifer

## Patentansprüche

1. Verfahren zur Herstellung einer Kautschukfertigmischung enthaltend Vulkanisationschemikalien in einer Aggregatkombination aus einem Stempelkneter (1) und einem darunter angeordneten stempellosen Kneter (9), wobei das Verfahren ein diskontinuierliches Verfahren ist und wenigstens die folgenden Verfahrensschritte enthält:
a) Herstellung einer Kautschukgrundmischung in dem oberen Stempelkneter (1),
und
b) Überführung der Kautschukgrundmischung auf eine unterhalb des oberen Stempelkneters in einem Schacht (5) angeordnete Wiegevorrichtung (2) ohne Zwischenlagerung und
c) Bestimmung des Batch-Gewichtes der Kautschukgrundmischung und
d) Überführung der gewogenen Kautschukgrundmischung in den stempellosen Kneter (9) und
e) Berechnung der Menge an Vulkanisationschemikalien auf Basis des Batch-Gewichtes der gewogenen Kautschukgrundmischung und
f) Zugabe der berechneten Menge der Vulkanisationschemikalien zu der Kautschukgrundmischung in den stempellosen Kneter (9) und
g) Mischen aller in dem stempellosen Kneter (9) vorhandenen Bestandteile zu einer Kautschukfertigmischung,
**dadurch gekennzeichnet, dass** die Wiegevorrichtung (2) im Schacht (5) mit einer Heizvorrichtung und bevorzugt wärmeisolierten Schachtwänden (6) angeordnet ist und die Kautschukgrundmischung auf der Wiegevorrichtung (2) beheizt wird, und die Kautschukgrundmischung wenigstens eine Kieselsäure als Füllstoff und wenigstens ein Silan enthält.

2. Verfahren nach Anspruch 1, **dadurch gekennzeichnet, dass** der stempellose Kneter (9) ein Arbeitsvolumen aufweist, das um 70 bis 200 % größer ist als das des Stempelkneters (1).

3. Verfahren nach Anspruch 1 oder 2, **dadurch gekennzeichnet, dass** die Wiegevorrichtung (2) eine Waage (3) ist, die mittels einer Schiebe- und Ziehvorrichtung in einem Schacht (5) zwischen Stempelkneter (1) und stempellosem Kneter (9) angeordnet ist.

4. Verfahren nach Anspruch 3, **dadurch gekennzeichnet, dass** die Wiegevorrichtung (2) eine Schutzhülle (4) umfasst, die die Waage (3) umgibt, und die an einem Befestigungspunkt (7) oberhalb der Waage an einer Schachtwand (6) befestigt ist und den Schacht (5) an einem Austrittspunkt (8) unterhalb der Waage (3) und in Projektion entlang der Schachtwand unterhalb des Befestigungspunktes (7) verlässt.

5. Verfahren nach Anspruch 1 oder 2, **dadurch gekennzeichnet, dass** die Wiegevorrichtung (2) eine Waage (3) ist, die mittels einer Drehvorrichtung im Schacht (5) zwischen Stempelkneter (1) und stempellosem Kneter (9) angeordnet ist.

6. Verfahren nach Anspruch 1 oder 2, **dadurch gekennzeichnet, dass** die Wiegevorrichtung (2) eine Walze ist, in die eine Waage integriert ist oder die auf Wiegezellen angeordnet ist.

7. Verfahren nach Anspruch 1 oder 2, **dadurch gekennzeichnet, dass** die Wiegevorrichtung (2) ein Extruder ist, in den eine Waage integriert ist oder der auf Wiegezellen angeordnet ist.

8. Verfahren nach einem der vorherigen Ansprüche, **dadurch gekennzeichnet, dass** die Wiegevorrichtung (2) im Schacht (5) mit einer Kühlvorrichtung und bevorzugt wärmeisolierten Schachtwänden (6) angeordnet ist und die Kautschukgrundmischung auf der Wiegevorrichtung (2) gekühlt wird.

9. Verfahren nach Anspruch 8, **dadurch gekennzeichnet, dass** die Kautschukgrundmischung wenigstens einen Ruß als Füllstoff enthält.

10. Verwendung der nach dem Verfahren gemäß einem der Ansprüche 1 bis 9 hergestellten Kautschukfertigmischung für Fahrzeugreifen.

11. Aggregatkombination zur Durchführung des Verfahrens gemäss einem der Ansprüche 1 bis 9 zur Herstellung einer Kautschukfertigmischung, bestehend aus einem oberen Stempelkneter (1) und einem darunter angeordneten stempellosen Kneter (9), **dadurch gekennzeichnet, dass** sie zwischen dem oberen Stempelkneter und dem stempellosen Kneter (9) zumindest eine Wiegevorrichtung (2), die dort in einem Schacht (5) mit einer Heizvorrichtung und bevorzugt wärmeisolierten Schachtwänden (6) angeordnet ist, aufweist.

## Claims

1. Process for the production of a ready-to-use rubber mixture comprising vulcanization chemicals in a combined assembly composed of a kneader (1) with ram and of a ramless kneader (9) arranged thereunder, where the process is a batch process and comprises at least the following process steps:
a) production of a preparatory rubber mixture in the upper kneader (1) with ram,
and
b) without intermediate storage, transfer of the preparatory rubber mixture to a weighing device (2) arranged in a shaft (5) below the upper kneader with ram
and
c) determination of the batch weight of the preparatory rubber mixture and
d) transfer of the weighed preparatory rubber mixture into the ramless kneader (9) and
e) calculation of the quantity of vulcanization chemicals on the basis of the batch weight of the weighed preparatory rubber mixture and
f) addition of the calculated quantity of the vulcanization chemicals into the ramless kneader (9), to the preparatory rubber mixture, and
g) mixing of all of the constituents present in the ramless kneader (9) to give a ready-to-use rubber mixture,
**characterized in that**
the weighing device (2) is arranged in the shaft (5) with a heating device and preferably with thermally insulated shaft walls (6), and the preparatory rubber mixture is heated on the weighing device (2), and the preparatory rubber mixture comprises at least one silica as filler and at least one silane.

2. Process according to Claim 1, **characterized in that** the operating volume of the ramless kneader (9) is 70 to 200% greater than that of the kneader (1) with ram.

3. Process according to Claim 1 or 2, **characterized in that** the weighing device (2) is a balance (3) arranged by means of an insertion-and-withdrawal device in a shaft (5) between kneader (1) with ram and ramless kneader (9).

4. Process according to Claim 3, **characterized in that** the weighing device (2) comprises a protective covering (4) which surrounds the balance (3) and which is fixed at a fixing point (7) above the balance on a shaft wall (6) and leaves the shaft (5) at an exit point (8) below the balance (3) and, in projection along the shaft wall, below the fixing point (7).

5. Process according to Claim 1 or 2, **characterized in that** the weighing device (2) is a balance (3) which is arranged by means of a rotating device in the shaft (5) between kneader (1) with ram and ramless kneader (9).

6. Process according to Claim 1 or 2, **characterized in that** the weighing device (2) is a roll system into which a balance is integrated, or which is arranged on load cells.

7. Process according to Claim 1 or 2, **characterized in that** the weighing device (2) is an extruder into which a balance is integrated, or which is arranged on load cells.

8. Process according to any of the preceding claims, **characterized in that** the weighing device (2) is arranged in the shaft (5) with a cooling device and preferably with thermally insulated shaft walls (6), and the preparatory rubber mixture is cooled on the weighing device (2).

9. Process according to Claim 8, **characterized in that** the preparatory rubber mixture comprises at least one carbon black as filler.

10. Use, for tyres, of the ready-to-use rubber mixture produced by the process according to any of Claims 1 to 9.

11. Combined assembly for carrying out the process according to any of Claims 1 to 9 for the production of a ready-to-use rubber mixture, composed of an upper kneader (1) with ram and of a ramless kneader (9) arranged thereunder, **characterized in that** it has, between the upper kneader with ram and the ramless kneader (9), at least one weighing device (2) which is arranged therein in a shaft (5) with a heating device and preferably with thermally insulated shaft walls (6).

## Revendications

1. Procédé de fabrication d'un mélange de caoutchouc fini contenant des produits chimiques de vulcanisation dans une unité combinée d'un malaxeur à piston (1) et d'un malaxeur sans piston (9) disposé au-dessous de celui-ci, le procédé étant un procédé discontinu et comprenant au moins les étapes de procédé suivantes consistant à :
a) fabriquer un mélange de base de caoutchouc dans le malaxeur à piston (1) supérieur, et
b) transférer sans stockage intermédiaire le mélange de base de caoutchouc sur un dispositif de pesage (2) disposé au-dessous du malaxeur à piston supérieur dans une cuve (5), et
c) déterminer le poids de lot du mélange de base de caoutchouc, et
d) transférer le mélange de base de caoutchouc pesé dans le malaxeur sans piston (9), et
e) calculer la quantité de produits chimiques de vulcanisation sur la base du poids de lot du mélange de base de caoutchouc pesé, et
f) ajouter la quantité calculée des produits chimiques de vulcanisation au mélange de base de caoutchouc dans le malaxeur sans piston (9), et
g) mélanger tous les composants présents dans le malaxeur sans piston (9) pour former un mélange de caoutchouc fini,
**caractérisé en ce que** le dispositif de pesage (2) est disposé dans la cuve (5) avec un dispositif de chauffage et de préférence avec des parois de cuve (6) isolées thermiquement, et le mélange de base de caoutchouc est chauffé sur le dispositif de pesage (2), et le mélange de base de caoutchouc contient au moins un acide silique comme matière de charge et au moins un silane.

2. Procédé selon la revendication 1, **caractérisé en ce que** le malaxeur sans piston (9) présente un volume de travail qui est supérieur de 70 à 200 % à celui du malaxeur à piston (1).

3. Procédé selon la revendication 1 ou 2, **caractérisé en ce que** le dispositif de pesage (2) est une balance (3) qui est disposée au moyen d'un dispositif de poussée et de traction dans une cuve (5) entre le malaxeur à piston (1) et le malaxeur sans piston (9).

4. Procédé selon la revendication 3, **caractérisé en ce que** le dispositif de pesage (2) comprend une gaine de protection (4) qui entoure la balance (3), et qui est fixée à un point de fixation (7) au-dessus de la balance à une paroi de cuve (6) et quitte la cuve (5) au niveau d'un point de sortie (8) au-dessous de la balance (3) et en projection le long de la paroi de cuve au-dessous du point de fixation (7).

5. Procédé selon la revendication 1 ou 2, **caractérisé en ce que** le dispositif de pesage (2) est une balance (3) qui est disposée au moyen d'un dispositif rotatif dans la cuve (5) entre le malaxeur à piston (1) et le malaxeur sans piston (9).

6. Procédé selon la revendication 1 ou 2, **caractérisé en ce que** le dispositif de pesage (2) est un rouleau qui est intégré dans une balance ou qui est disposé sur des cellules de pesée.

7. Procédé selon la revendication 1 ou 2, **caractérisé en ce que** le dispositif de pesage (2) est une extrudeuse dans laquelle une balance est intégrée ou qui est disposée sur des cellules de pesée.

8. Procédé selon l'une quelconque des revendications précédentes, **caractérisé en ce que** le dispositif de pesage (2) est disposé dans la cuve (5) avec un dispositif de refroidissement et de préférence avec des parois de cuve (6) isolées thermiquement, et le mélange de base de caoutchouc est refroidi sur le dispositif de pesage (2).

9. Procédé selon la revendication 8, **caractérisé en ce que** le mélange de base de caoutchouc contient au moins du noir de carbone comme matière de charge.

10. Utilisation du mélange de caoutchouc fini fabriqué selon le procédé selon l'une quelconque des revendications 1 à 9 pour des pneumatiques de véhicule.

11. Unité combinée pour effectuer le procédé selon l'une quelconque des revendications 1 à 9 pour fabriquer un mélange de caoutchouc fini, composée d'un malaxeur à piston (1) supérieur et d'un malaxeur sans piston (9) disposé au-dessous de celui-ci, **caractérisée en ce qu'**elle présente entre le malaxeur à piston supérieur et le malaxeur sans piston (9) au moins un dispositif de pesage (2) qui y est disposé dans une cuve (5) dotée d'un dispositif de chauffage et de préférence de parois de cuve (6) isolées thermiquement.
